# EUROPEAN PATENT APPLICATION

(11) **EP 4 343 190 A1**
(43) Date of publication of application: **27.03.2024**
(21) Application number: 23196278.8
(22) Date of filing: 08.09.2023
(51) Int. Cl.: F16K 31/06, F16K 49/00, F16K 7/14, F16K 27/02, H01M 8/00

(54) **SOLENOID VALVE FOR A FUEL CELL SYSTEM AND FUEL CELL SYSTEM**

(30) Priority: 25.09.2022 US 202217952289
(71) Applicant: ECO Holding 1 GmbH, 97828 Marktheidenfeld (DE)
(72) Inventor: SCHMIDT, Harald, Lake Orion, 48359 (US); LENTZ, Chris, Lake Orion, 48362 (US); STANHOPE, Daniel, Nunica, 49448 (US); PARKER, Kenneth, Clarkston, 48348 (US)
(74) Representative: Keller Schneider Patentanwaltsgesellschaft mbH

(57) **Abstract**

An electromagnetic valve (51) for an anode supply of a fuel cell system, the electromagnetic valve configured as a purge or drain valve including an actuator (52) including a magnet coil (50) configured to electromagnetically actuate an armature (53), and a valve plunger (54) operatively connected with the armature; a valve seat (57) openable and closable as a function of an actuation of the valve plunger so that a media connection between an inlet (56) and an outlet (59) is controlled through a valve chamber (58), wherein the valve seat and the inlet are configured at a connection spout connected with the actuator, and wherein an additional magnet coil (70) is provided as a heating coil.

## Description

### FIELD OF THE INVENTION

The invention relates to an electromagnetic valve for an anode supply of a fuel cell system which is configured as a purge valve or drain valve and a fuel cell system with the valve.

### BACKGROUND OF THE INVENTION

Fuel cell systems with an anode supply and a cathode supply are known in the art. Fuel cell systems utilize a chemical transformation of a fuel with oxygen into water in order to generate electrical energy. In order to supply a fuel cell stack of the fuel cell system with operating agents an anode supply is provided for feeding and exhausting the anode operating agent, e.g. hydrogen, a cathode supply for feeding and exhausting a cathode operating agent, e.g. air and a coolant cycle. The anode supply and the cathode supply respectively include a feed conduit for feeding the operating agent and an exhaust conduit. The anode supply additionally includes a recirculation conduit configured to feed hydrogen included in the anode side exhaust gas of the fuel cell stack back into the fuel cell stack.

The anode exhaust gas conduit typically includes a water precipitator including a downstream drain valve configured to drain product water generated by the fuel cell reaction and a purge valve configured to drain the anode gasses, mostly nitrogen.

At low ambient temperatures there is a risk of water arranged in the valve channels freezing so that valve devices of the valve freeze. This can cause malfunctions and damages of the fuel cell system.

Therefore, it is known in the art to use the magnet coil of the valve as a heating coil and to apply a non-switching heating current to the magnet coil in addition to a switching current. However, the valve device is only heated indirectly by heating the magnet coil which is perceived as a disadvantage.

### BRIEF SUMMARY OF THE INVENTION

Quickly heating the valve device is desirable. Thus, it is an object of the invention to provide an electromagnetic valve configured as a purge valve or drain valve of a fuel cell system which facilitates heating the valve device more quickly compared to known magnet valves. It is another object of the invention to provide a fuel cell system with valves that are heatable rather quickly.

The object is achieved by an electromagnetic valve for an anode supply of a fuel cell system, the electromagnetic valve configured as a purge or drain valve including an actuator including a magnet coil configured to electromagnetically actuate an armature, and a valve plunger operatively connected with the armature; a valve seat openable and closable as a function of an actuation of the valve plunger so that a media connection between an inlet and an outlet is controlled through a valve chamber, wherein the valve seat and the inlet are configured at a connection spout connected with the actuator, and wherein an additional magnet coil is provided as a heating coil.

The electromagnetic valve according to the invention for an anode supply of a fuel cell system is configured as a purge valve or drain valve and includes an actuator including a magnet coil configured to electromagnetically actuate an armature and a valve plunger operatively connected with the armature, a valve seat which is openable and closeable as a function of an actuation of the valve plunger so that a media connection between an inlet and an outlet is controlled through a valve chamber. The valve seat and the inlet are configured at a connection spout connected with the actuator. According to the invention an additional magnet coil is provided as a heating coil. The configuration according to the invention facilitates quick heating of the valve system at low ambient temperatures and thus assures a functioning of the fuel cell system at low ambient temperatures.

Advantageously the connection spout is one piece, containing at least the inlet and the outlet.

According to an advantageous embodiment the heating coil is arranged between the actuator and the connection spout and the heating coil envelops the valve seat in a radial direction.

Advantageously the connection spout is an injection molded part and the heating coil is integrated in the connection spout near the valve seat.

According to an advantageous embodiment the heating coil is attached at the actuator by the connection spout.

According to an advantageous embodiment of the invention the heating coil can include an additional contact.

According to an advantageous embodiment of the invention the electromagnetic valve comprises a safety function which causes the heating coil to be switched off if a certain temperature is exceeded.

According to an advantageous embodiment of the invention the electromagnetic valve comprises a thermal control switch and a temperature sensing element, wherein the thermal control switch interrupts the power supply to the heating coil when the temperature sensing element measures a certain temperature limit value. For example the thermal control switch is assigned to the heating coil. Preferably the thermal control switch comprises a sensing element which is arranged directly next to the heating coil.

According to an advantageous embodiment of the invention the thermal control switch comprises a thermal fuse.

The object is also achieved by a fuel cell system including at least one fuel cell stack, a cathode supply and an anode supply and a valve according to the invention arranged in the anode supply.

According to an advantageous embodiment of the invention the fuel cell system, comprises at least one fuel cell stack, a cathode supply, an anode supply, and the electromagnetic valve according to one of the mentioned embodiments arranged in the anode supply and/ or the cathode supply.

Thus the electromagnetic valve according to one of the mentioned embodiments can be arranged in the anode supply or the cathode supply. In addition, the electromagnetic valve according to one of the mentioned embodiments can also be arranged in the anode supply and the cathode supply.

The subsequent detailed description of the invention and the patent claims define additional advantageous embodiments and features combinations of the invention.

### BRIEF DESCRIPTION OF THE DRAWINGS

The invention is now described based an two advantageous embodiments with reference to drawing figures, wherein:
FIG. 1 illustrates a schematic representation of a fuel cell system; and
FIG. 2 illustrates a first embodiment of an electromagnetic valve according to the invention in a longitudinal sectional view.
FIG. 3 illustrates a second embodiment of an electromagnetic valve according to the invention in a longitudinal sectional view.

### DETAILED DESCRIPTION OF THE INVENTION

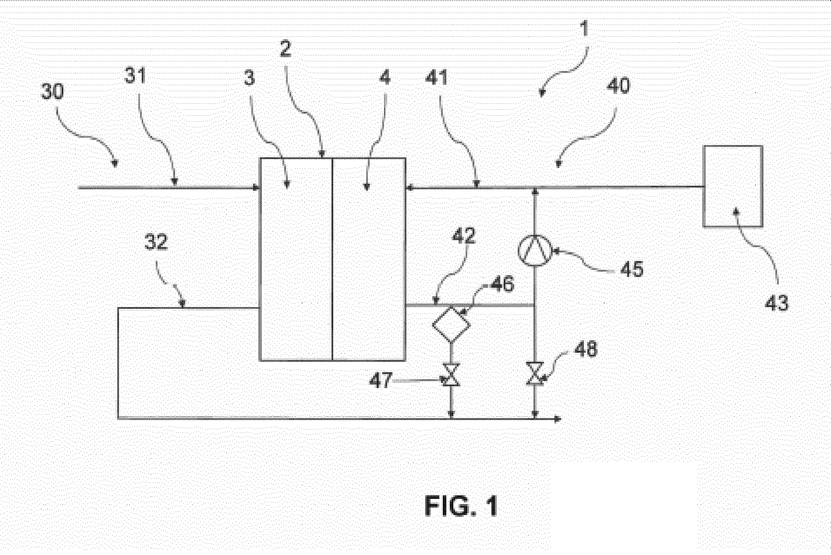

FIG. 1 shows a schematic representation of a known fuel cell system 1 for a vehicle, in particular an electric vehicle including an electric traction motor that is supplied with electric energy by the fuel cell system 1.

The fuel cell system 1 includes a fuel cell stack 2 that is typically configured as a stack of proton exchange membrane (PEM) fuel cells. A common cathode cavity 3 is associated with a cathode supply 30 configured to feed an exhaust a cathode operating agent, e.g. air and a common anode cavity 4 is associated with an anode supply 40 configured to feed and exhaust an anode operating agent, e.g. hydrogen.

The cathode supply 30 includes a cathode supply conduit 31 that feeds air pulled from ambient into the common cathode cavity 3 of the fuel cell stack 2. A cathode exhaust conduit 32 exhausts cathode exhaust gas from the common cathode cavity 3. The cathode exhaust gas may be fed to an exhaust gas arrangement as needed. The anode supply 40 includes an anode supply conduit 41 which provides the anode operating agent, in particular hydrogen from a hydrogen tank 43 to the common anode cavity 4. The anode supply conduit 41 typically includes additional components including a tank valve, a dosing valve and a cut oft valve. An anode exhaust gas conduit 42 exhausts anode exhaust gas from the common anode cavity 4. The anode supply 40 additionally includes a recirculation conduit 44 configured to feed hydrogen included in the anode side exhaust gas of the fuel cell stack 2 back to the fuel cell stack 2 through a recirculation device 45, e.g. a recirculation blower.

The anode exhaust gas conduit 41 furthermore includes a water precipitator 46 with a downstream drain valve 47 configured to drain product water generated by the fuel cell reaction and a purge valve 48 configured to vent anode gasses, mostly nitrogen.

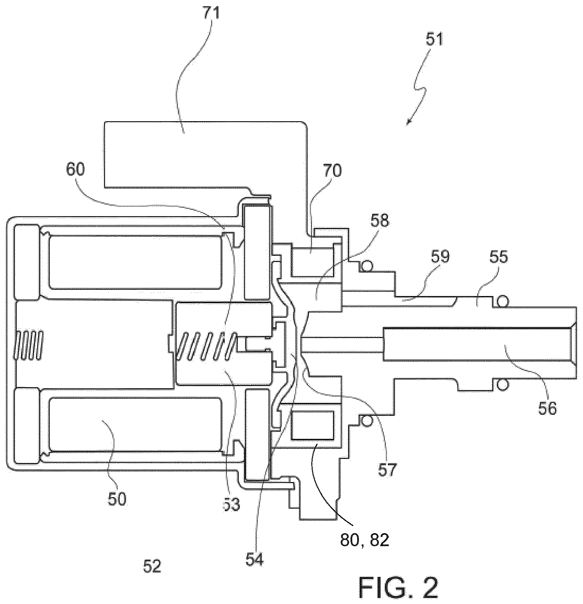

The drain valve 47 and the purge valve 48 are configured as electromagnetic valves and respectively include a magnet coil 50 configured to electromagnetically actuate the valve. FIG. 2 illustrates a first embodiment of an advantageous electromagnetic valve 51 which can be used as a drain valve 47 or a purge valve 48.

The valve 51 includes an electromagnetic actuator 52 which includes the magnet coil 50 configured to electromagnetically actuate an armature 53 and a valve plunger 54 operatively connected therewith. A connection spout 55 of the valve 51 including an inlet 56 configured as a pass-through opening and a valve seat 57 is connected with the actuator 52 in a sealing manner. A valve chamber 58 is configured between the connection spout 55 and the valve plunger 54 wherein the valve chamber facilitates a media connection between the inlet 56 and an outlet 59 when the valve seat 57 is open as illustrated. In the illustrated embodiment, the outlet 59 is also provided in the connection spout 55.

When the valve plunger 54 is moved by the armature 53 against a compression spring or plural compression springs 60 in a direction towards the armature 53 the valve seat 57 opens and the media connection is established. When no current is supplied to the armature 53 the valve seat 57 remains closed by the spring force of the compression spring 60.

An additional magnet coil is provided configured as a heating coil 70 in order to assure a quick heating of the valve system at low ambient temperatures and thus a functioning of the fuel cell system.

As evident from FIG . 2, the heating coil 70 is advantageously arranged between the actuator 52 and the connection spout 55 and the heating coil 70 envelops the valve seat 57 in a radial direction. Thus, the heating coil 70 is arranged directly, this means as closely as possible to the valve device including the valve seat 57 and the valve plunger 54 so that the valve device can be heated quickly with low power consumption.

The heating coil 70 can be attached at the actuator 52 in a simple manner through the connection spout 55. Therefore, the connection spout 55 envelops the heating coil 70 at least partially, wherein the heating coil 70 includes an additional contact 71. The connection spout 55 could be one piece, containing multiple components, e.g. inlet 56 and outlet 59.

In addition, a thermal control switch 80 is assigned to the heating coil 70. The thermal control switch 80 comprises a sensing element 82 which is arranged directly next to the heating coil 70 in order to achieve the most precise temperature measurement possible. When a certain temperature limit is exceeded, the thermal control switch 80 interrupts the power supply to the heating coil 70. For example, the thermal control switch 80 comprises a thermal fuse. Thus the electromagnetic valve 51 contains a safety function which causes the electromagnetic valve 51 to be switched off if a certain temperature is exceeded.

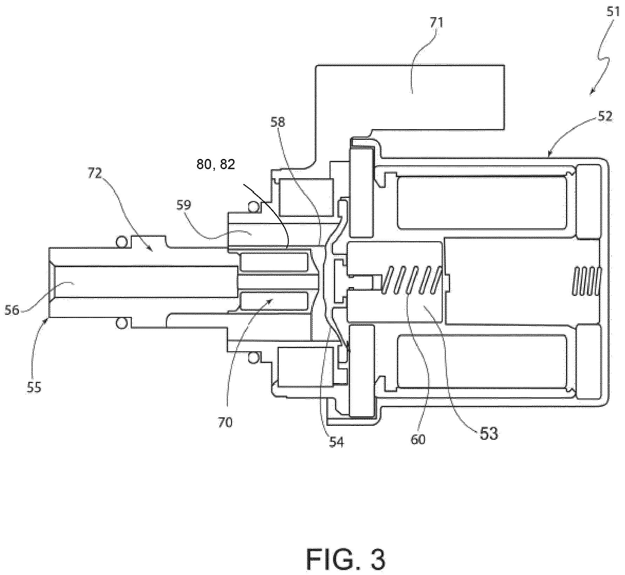

FIG. 3 illustrates a second embodiment of an advantageous electromagnetic valve 51 which can be used as a drain valve 47 or a purge valve 48. The structure of the valve differs from the first embodiment only in the positioning of the heating coil 70, which does not radially surround the valve seat 57, but is integrated in the connection spout 55 near the valve seat 57.

This embodiment also comprises the safety function wherein the thermal control switch 80 is placed next to the heating coil 70. The thermal control switch 80 comprises the sensing element 82 which is arranged closely to the heating coil 70 in order to achieve the most precise temperature measurement possible. When a certain temperature limit is exceeded, the thermal control switch 80 interrupts the power supply to the heating coil 70. For example, the thermal control switch 80 comprises a thermal fuse.

As it can be seen from FIG. 3, the connection spout 55 can be designed as an injection molded part, which could be one piece, containing multiple components and having the profile 72 to hold the heating coil 70. The heating coil 70 is wound onto the said profile 72 and is connected to two terminal blades (not shown in the x-section).

Furthermore, the connection spout 55 and the heating coil 70 with the terminal blades are placed in a tool and overmolded with plastic to cover the windings. Additionally, material for the outlet 59 can be added, so that it is formed integrally with the connection spout 55. In an advantageous embodiment, contact 71, which holds the two terminal blades and forms the connection geometry, could also be added integrally to connection spout 55.

All features described and shown with respect to individual embodiments of the invention can be combined in various combinations according to the invention in order to achieve the advantageous effects of the invention. The patent scope is defined exclusively by the appended claims and is not limited by the features described in the specification or shown in the drawing figures.

## Claims

1. An electromagnetic valve for an anode supply of a fuel cell system, the electromagnetic valve configured as a purge or drain valve, comprising:
an actuator including a magnet coil configured to electromagnetically actuate an armature, and a valve plunger operatively connected with the armature;
a valve seat openable and closable as a function of an actuation of the valve plunger so that a media connection between an inlet and an outlet is controlled through a valve chamber,
wherein the valve seat and the inlet are configured at a connection spout connected with the actuator, and wherein
an additional magnet coil is provided as a heating coil.

2. The electromagnetic valve according to claim 1, wherein the connection spout is integrally provided in one piece, including the inlet and the outlet.

3. The electromagnetic valve according to claim 1 or 2, wherein the heating coil is arranged between the actuator and the connection spout, and wherein the heating coil radially envelops the valve seat.

4. The electromagnetic valve according to one of the preceding claims, wherein the connection spout is an injection molded part and the heating coil is integrally molded into the connection spout proximal to the valve seat.

5. The electromagnetic valve according to one of the preceding claims, wherein the heating coil is attached at the actuator by the connection spout.

6. The electromagnetic valve according to one of the preceding claims, wherein the heating coil includes an additional electrical contact.

7. The electromagnetic valve according to one of the preceding claims, wherein a thermal control switch is assigned to the heating coil.

8. The electromagnetic valve according to claim 7, wherein the thermal control switch comprises a sensing element which is arranged directly next to the heating coil.

9. A fuel cell system, comprising:
at least one fuel cell stack;
a cathode supply;
an anode supply; and
the electromagnetic valve according to one of the claims 1 to 8 arranged in the anode supply and/ or the cathode supply.
